# EUROPÄISCHE PATENTSCHRIFT

(11) **EP 1 112 235 B1**
(45) Veröffentlichungstag und Bekanntmachung des Hinweises auf die Patenterteilung: **27.11.2002**
(21) Anmeldenummer: 99940126.8
(22) Anmeldetag: 02.08.1999
(51) Int. Cl.: C03B 40/00, C03B 9/46, C03B 9/48

(54) **BESCHICHTUNG FÜR WERKZEUGE ZUR BEARBEITUNG VON WÄRMEBEHANDELTEM GLAS**
COATING FOR TOOLS USED TO PROCESS HEAT TREATED GLASS
REVETEMENT POUR OUTILS UTILISES DANS LE TRAVAIL DU VERRE TREMPE

(30) Priorität: 03.08.1998 DE 19834968
(43) Veröffentlichungstag der Anmeldung: 04.07.2001
(73) Patentinhaber: Fraunhofer-Gesellschaft zur Förderung der angewandten Forschung e.V., 80636 München (DE)
(72) Erfinder: GADOW, Rainer, D-84544 Aschau (DE); BRAND, Jochen, D-38126 Braunschweig (DE); KILLINGER, Andreas, D-70771 Leinfelden (DE)
(74) Vertreter: Pfenning, Meinig & Partner GbR
(86) Internationale Anmeldenummer: EP9905603
(87) Internationale Veröffentlichungsnummer: WO00007951

(56) Entgegenhaltungen:
- WO-A1-99/47346
- US-A- 5 026 415
- US-A- 5 380 349
- US-A- 5 770 294

## Beschreibung

Die Erfindung bezieht sich auf eine Beschichtung für Werkzeuge sowie auf ein Werkzeug zur Bearbeitung von mittels Wärme erweichtem Glas sowie auf ein Verfahren zum Herstellen derartiger Beschichtungen. Derartige Beschichtungen werden bei der Verarbeitung von mittels Wärme erweichten Gläsern, wie beispielsweise Glasschmelzen, benötigt.

Nach dem Stand der Technik werden beim Verarbeiten von Glasschmelzen und von mittels Wärme erweichten Gläsern Werkzeuge aus Stahl, HSS, Hartmetall oder Keramik eingesetzt.

Derartige Werkzeuge, die gegen hohe Temperaturen widerstandsfähig sein müssen, neigen jedoch aufgrund chemischer und physikalischer Wechselwirkungen zum Anhaften des erwärmten Glases. Dadurch entstehen Produkte mit Verunreinigung oder schlechten Oberflächenqualitäten, die nachgearbeitet werden oder gar als Ausschuß verworfen werden müssen. Weiterhin treten durch das Anhaften des Glases an die Werkzeuge Produktionsstörungen auf. Nach dem Stand der Technik haben sich daher für derartige Glasbearbeitungswerkzeuge, wie Umformwerkzeuge, Kalibrierdorne und dergleichen, Beschichtungen aus Suspensionen von fein verteiltem Graphit und/oder technischen Rußen teilweise bewährt. Die Oberflächengüte derartiger Beschichtungen genügt jedoch nur mittleren Ansprüchen und ihre Abriebfestigkeit und die Standzeit der beschichteten Werkzeuge ist mangelhaft. In einigen Anwendungen werden auch galvanische Schichten, Chrom, Nickel und Nickel-Wolfram, mit Erfolg eingesetzt. Aber auch hier ist eine Steigerung der Standzeit wünschenswert.

Die US-A-5,380,349 beschreibt ein Sintermaterial, das gesinterte Diamantpartikel und ein geeignetes Sinteradditiv enthält. Diese Schicht wird mittels CVD aufgetragen.

Die US-A-5,770,294 beschreibt ein Verfahren zur Modifizierung der Oberflächen von Gußwerkzeugen, bei dem die Oberfläche zunächst durch Ionenbeschuß aktiviert und anschließend mit einer Kohlenstoffbeschichtung überzogen wird.

Die US-A-5,026,415 beschreibt ein Preßwerkzeug das mit einer Schicht aus a-C:H beschichtet ist. Der Anteil des Wasserstoffs in dieser Schicht beträgt dabei zwischen 5 und 40 %.

Die WO-A-99-47346 beschreibt eine Vorrichtung zum Verpressen von fließfähigen Feststoffen mit Preßwerkzeugen, die eine Beschichtung aus amorphem Kohlenstoff in einem Kohlenstoffnetzwerk besitzen, die zumindest mit Wasserstoff dotiert ist.

Aufgabe der Erfindung ist es, eine Beschichtung für Werkzeuge, Werkzeuge und Verfahren zur Beschichtung von Werkzeugen zur Bearbeitung von mittels Wärme erweichten Gläsern zur. Verfügung zu stellen, die das Anhaften von mittels Wärme erweichten Gläseren unterdrückt bzw. gänzlich verhindert.

Diese Aufgabe wird durch die Beschichtung nach dem Oberbegriff des Anspruchs 1 in Verbindung mit seinen kennzeichnenden Merkmalen sowie durch das Werkzeug nach Anspruch 11 und das Verfahren nach Anspruch 13 gelöst. Vorteilhafte Weiterbildungen der erfindungsgemäßen Beschichtung, Werkzeuge und Verfahren werden in den abhängigen Ansprüchen gegeben.

Durch die Beschichtung des Werkzeuges mit einem kohlenstoffbasierten Schichtsystem und/oder kohlenstoffhaltigen Hartstoffsystem erhält das Werkzeug eine adhäsionshemmende, verschleißfeste und reißarme Oberfläche, die das Anhaften von mittels Wärme erweichten Gläsern, wie Glasschmelzen oder erweichten und temperierten Glashalbzeugen unterdrückt oder gar gänzlich verhindert. Die kohlenstoffhaltigen Schichten besitzen an Luft oberhalb von 400 °C nur eine begrenzte Lebensdauer und werden daher herkömmlicherweise für die Anwendung auf Werkzeugen zur Bearbeitung von mittels Wärme erweichten Gläser ausgeschlossen. Überraschenderweise weisen jedoch die erfindungsgemäßen Beschichtungen trotz der am Werkzeug bei der Bearbeitung von heißem Glas auftretenden Temperaturen eine hohe Lebensdauer und sehr gute Verschleiß- und Anti-Haft-Eigenschaften auf. Die Beständigkeit der erfindungsgemäßen Beschichtungen trotz der hohen Temperaturen ist überraschend und steht möglicherweise im Zusammenhang mit der hohen Wärmeleitfähigkeit des für derartige Werkzeuge verwendeten Materials. Der Auftrag dieser Beschichtungen kann durch Gasphasenabscheidungsverfahren wie CVD- oder PVD-Verfahren auch auf beliebig geformten oder gekrümmten Flächen erfolgen und bildet die Oberflächentopographie des Werkzeuges ab. Auch eine partielle Bauteilbeschichtung ist durch diese Verfahren möglich.

Die erfindungsgemäßen Beschichtungen, der beschichteten Werkzeuge und durch das erfindungsgemäße Verfahren hergestellten Beschichtungen ermöglichen es, den Einsatz von Trenn- und Schmiermitteln zu verringern oder zu vermeiden, erlauben eine höhere Standzeit von Werkzeugen zur Glasbearbeitung (Verschleißschutz), eine Verringerung von Stillstands- und Wechselzeiten sowie eine Verbesserung der Oberflächenqualität der Glasprodukte und damit die Vermeidung von Ausschußteilen. Die erfindungsgemäßen Beschichtungen werden insbesondere auf Werkzeugen, die mit mittels Wärme erweichten Gläsern und Glasschmelzen in Berührung kommen, z.B. Stempel, Matrizen, Kalibrierwerkzeugen oder Messern aufgebracht.

Die mit den CVD- oder PVD-Verfahren aufgebrachten Beschichtungen unterdrücken auch auf längere Dauer und für hohe Produktionsstückzahlen das Anhaften des Glases und schützen so das Werkzeug vor Verschleiß.

Besonders geeignet sind a-C, i-C, Me-C:H-Schichten, Si-C:H-Schichten sowie kohlenstoffhaltige Hartstoffschichten wie beispielsweise TiC, ZrC, TiCN, ZrCN, CrC oder CrCN.

Als Metalle für die Me-C:H-Schichten erweisen sich insbesondere Ti, W, Cr, Nb, Ta und/oder Si als besonders für die Anti-Haft-Eigenschaften der Beschichtung günstig. Vorteilhafte Metallgehalte liegen zwischen 1 % und 40 %.

Die Beschichtung der Werkzeuge weist typischerweise eine Schichtdicke von 0,2 µm bis 15 µm auf.

Im folgenden werden einige Beispiele für die erfindungsgemäßen Beschichtungen, Werkzeuge und Verfahren gegeben werden.

### Glaswerkzeuge:

Einsatz von kohlenstoffbasierten Schichten auf HSSoder Hartmetallmessern zum Abschneiden von Tropfen aus Glasschmelzen, z.B. für die Herstellung von Bildrähren.
- Erfolg:: Hohe Standzeit, Vermeidung des Schmiermittels, dadurch bessere Glasqualität.

Beschichtung von Kalibrierdornen zur Herstellung von Glasröhren.
- Erfolg:: Kein Anhaften, dadurch bessere Oberflächenqualität.

Eine weitere sehr wichtige Anwendung ist der Einsatz der Beschichtung auf Preßformen zur Herstellung von Bildröhren.

## Patentansprüche

1. Beschichtung für Werkzeuge zur Bearbeitung von mittels Wärme erweichtem Glas, wie beispielsweise Glasschmelzen oder dergleichen, zur Verringerung der Anhaftung des Glases,
**dadurch gekennzeichnet,**
**daß** die Beschichtung zumindest teilweise aus einer kohlenstoffbasierten Schicht und/oder kohlenstoffhaltigen Hartstoffen besteht, wobei die Schicht eine Schicht aus a-C, i-C, Me-C:H oder Si-C:H ist.

2. Beschichtung nach Anspruch 1, **dadurch gekennzeichnet, daß** die kohlenstoffbasierte Schicht eine Schicht aus Me-C:H mit einem Metall der 4ten bis 6ten Nebengruppe, vorteilhafterweise Ti, W, Cr, Nb, Ta und/oder Si als Metall Me ist.

3. Beschichtung nach Anspruch 2, **dadurch gekennzeichnet, daß** der Me-Gehalt zwischen 1 % und 40 % beträgt.

4. Beschichtung nach mindestens einem der vorhergehenden Ansprüche, **dadurch gekennzeichnet, daß** der kohlenstoffhaltige Hartstoff TiC, ZrC, TiCN, ZrCN, CrC und/oder CrCN ist.

5. Beschichtung nach mindestens einem der vorhergehenden Ansprüche, **dadurch gekennzeichnet, daß** die kohlenstoffbasierte Schicht eine Dicke zwischen 0,2 µm und 15 µm aufweist.

6. Beschichtung nach mindestens einem der vorhergehenden Ansprüche, **dadurch gekennzeichnet, daß** die kohlenstoffbasierte Schicht und/oder die kohlenstoffhaltigen Hartstoffe durch Gasphasenabscheidung, insbesondere durch ein CVD- oder PVD-Verfahren abgeschieden sind.

7. Verwendung einer Beschichtung nach mindestens einem der vorhergehenden Ansprüche für Werkzeuge zum Bearbeiten von mittels Wärme behandeltem Glas.

8. Verwendung nach Anspruch 7 auf Schneidwerkzeugen, Kalibrierdornen, Preßwerkzeugen.

9. Werkzeug zur Bearbeitung von mittels Wärme erweichtem Glas, wie beispielsweise Glasschmelzen und dergleichen, **dadurch gekennzeichnet, daß** es zumindest teilweise mit einer Beschichtung nach mindestens einem der Ansprüche 1 bis 6 versehen ist.

10. Verwendung eines Werkzeuges nach Anspruch 9 zum Verarbeiten von mittels Wärme erweichtem Glas.

11. Verfahren zur Herstellung von Beschichtungen auf Werkzeugen zum Bearbeiten von mittels Wärme behandeltem Glas,
**dadurch gekennzeichnet,**
**daß** mittels eines Gasphasenabscheideverfahrens vorzugsweise durch ein CVD- oder PVD-Verfahren, eine kohlenstoffbasierte Schicht und/oder eine kohlenstoffhaltige Hartstoffschicht, wobei als Schicht eine Schicht aus a-C, Me-C:H oder Si-C:H zumindest auf einem Teil der mit dem mit dem Werkzeug zu verarbeitenden Material kontaktierenden Oberfläche des Werkzeuges abgeschieden wird.

12. Verfahren nach Anspruch 11 , **dadurch gekennzeichnet, daß** als kohlenstoffbasierte Schicht eine Schicht aus Me-C:H abgeschieden wird, die als Metall Me, Ti, W, Cr, Nb oder Ta enthält.

13. Verfahren nach mindestens einem der Ansprüche 11 oder 12, **dadurch gekennzeichnet, daß** als kohlenstoffbasierte Schicht eine Schicht aus Me-C:H abgeschieden wird, die einen Me-Gehalt zwischen 1 % und 40 % besitzt.

14. Verfahren nach mindestens einem der Ansprüche 11 bis 13, **dadurch gekennzeichnet, daß** eine kohlenstoffhaltige Hartstoffschicht aus TiC, ZrC, TiCN, ZrCN, CrC und/oder CrCN abgeschieden wird.

15. Verfahren nach mindestens einem der Ansprüche 11 bis 14, **dadurch gekennzeichnet, daß** eine kohlenstoffbasierte Schicht mit einer Dicke zwischen 0,2 µm und 15 µm abgeschieden wird.

## Claims

1. Coating for tools used to process heat-softened glass, such as for example glass melts or the like, in order to reduce the adhesion of the glass, **characterized in that** the coating consists at least in part of a carbon-based layer and/or carbon-containing hard materials, the layer being a layer comprising a-C, i-C, Me-C:H or Si-C:H.

2. Coating according to Claim 1, **characterized in that** the carbon-based layer is a layer comprising Me-C:H with a metal from the fourth to sixth subgroup, advantageously Ti, W, Cr, Nb, Ta and/or Si, as metal Me.

3. Coating according to Claim 2, **characterized in that** the Me content is between 1% and 40%.

4. Coating according to at least one of the preceding claims, **characterized in that** the carbon-containing hard material is TiC, ZrC, TiCN, ZrCN, CrC and/or CrCN.

5. Coating according to at least one of the preceding claims, **characterized in that** the carbon-based layer has a thickness of between 0.2 µm and 15 µm.

6. Coating according to at least one of the preceding claims, **characterized in that** the carbon-based layer and/or the carbon-containing hard materials are deposited by vapour phase deposition, in particular by a CVD or PVD process.

7. Use of a coating according to at least one of the preceding claims for tools for processing heat-treated glass.

8. Use according to Claim 7 on cutting tools, calibrating mandrels, press tools.

9. Tool for processing heat-softened glass, such as for example glass melts and the like, **characterized in that** it is at least partially provided with a coating according to at least one of Claims 1 to 6.

10. Use of a tool according to Claim 9 for processing heat-softened glass.

11. Process for producing coatings on tools for processing heat-treated glass, **characterized in that** a vapour deposition process, preferably a CVD or PVD process, is used to deposit a carbon-based layer and/or a carbon-containing hard-material layer, in which the layer is a layer comprising a-C, Me-C:H or Si-C:H, on at least part of that surface of the tool which makes contact with the material which is to be processed using the tool.

12. Process according to Claim 11, **characterized in that** the carbon-based layer deposited is a layer comprising Me-C:H which as metal Me contains Ti, W, Cr, Nb or Ta.

13. Process according to at least one of Claims 11 or 12, **characterized in that** the carbon-based layer deposited is a layer comprising Me-C:H which has an Me content of between 1% and 40%.

14. Process according to at least one of Claims 11 to 13, **characterized in that** a carbon-containing hard-material layer comprising TiC, ZrC, TiCN, ZrCN, CrC and/or CrCN is deposited.

15. Process according to at least one of Claims 11 to 14, **characterized in that** a carbon-based layer with a thickness of between 0.2 µm and 15 µm is deposited.

## Revendications

1. Revêtement pour outils destinés au travail de verre ramolli à la chaleur, par exemple des bains de verre fondu ou analogues, pour réduire l'adhérence du verre, **caractérisé en ce que** le revêtement est constitué au moins en partie d'une couche à base de carbone et/ou de matériaux durs contenant du carbone, la couche étant une couche de a-C, i-C, Me-C:H ou Si-C:H.

2. Revêtement selon la revendication 1, **caractérisé en ce que** la couche à base de carbone est une couche constituée de Me-C:H en utilisant comme métal Me un métal du 4^{ième} au 6^{ième} sous-groupes, avantageusement Ti, W, Cr, Nb, Ta et/ou Si.

3. Revêtement selon la revendication 2, **caractérisé en ce que** la teneur en Me se situe entre 1% et 40%.

4. Revêtement selon au moins l'une quelconque des revendications précédentes, **caractérisé en ce que** le matériau dur contenant du carbone est TiC, ZrC, TiCN, ZrCN, CrC et/ou CrCN.

5. Revêtement selon au moins l'une quelconque des revendications précédentes, **caractérisé en ce que** la couche à base de carbone a une épaisseur entre 0,2 µm et 15 µm.

6. Revêtement selon au moins l'une quelconque des revendications précédentes, **caractérisé en ce que** la couche à base de carbone et/ou les matériaux durs contenant du carbone sont déposés par dépôt en phase gazeuse, en particulier par un procédé CVD ou PVD.

7. Utilisation d'un revêtement selon l'une quelconque des revendications précédentes pour outils pour le travail de verre traité à la chaleur.

8. Utilisation selon la revendication 7 sur des outils de coupe, des mandrins de calibrage et des outils de compression.

9. Outil pour le travail de verre ramolli à la chaleur, par exemple des bains de verre fondu et analogues, **caractérisé en ce qu'**il est pourvu au moins en partie d'un revêtement selon au moins l'une quelconque des revendications 1 à 6.

10. Utilisation d'un outil selon la revendication 9 pour le travail de verre ramolli à la chaleur.

11. Procédé de fabrication de couches sur des outils pour le travail de verre traité à la chaleur, **caractérisé en ce que** l'on dépose, au moyen d'un procédé de dépôt en phase gazeuse, de préférence par un procédé CVD ou PVD, une couche à base de carbone et/ou une couche de matériau dur contenant du carbone, où l'on utilise comme couche une couche de a-C, Me-C:H ou Si-C:H, au moins sur une partie de la surface de l'outil venant en contact avec le matériau à traiter avec l'outil.

12. Procédé selon la revendication 11, **caractérisé en ce qu'**on dépose comme couche à base de carbone une couche de Me-C:H, qui contient Ti, W, Cr, Nb ou Ta comme métal Me.

13. Procédé selon au moins l'une des revendications 11 à 12, **caractérisé en ce qu'**on dépose une couche de matériau dur contenant du carbone formée de Me -C:H, qui a une teneur en métal Me entre 1% et 40%.

14. Procédé selon au moins l'une des revendications 11 à 13, **caractérisé en ce qu'**on dépose une couche de matériau dur contenant du carbone formée de TiC, ZrC, TiCN, ZrCN, CrC et/ou CrCN.

15. Procédé selon au moins l'une des revendications 11 à 14, **caractérisé en ce qu'**on dépose une couche à base de carbone d'une épaisseur entre 0,2 µm et 15 µm.
